(19) Europäisches Patentamt
European Patent Office
Office européen des brevets

(11) EP 4 629 383 A1

# (12) EUROPEAN PATENT APPLICATION
published in accordance with Art. 153(4) EPC

(43) Date of publication:
**08.10.2025 Bulletin 2025/41**

(21) Application number: **24773867.7**

(22) Date of filing: **26.02.2024**

(51) International Patent Classification (IPC):
***H01M 10/054*** *(2010.01)* ***H01M 4/38*** *(2006.01)*
***H01M 4/134*** *(2010.01)* ***H01M 10/0563*** *(2010.01)*

(52) Cooperative Patent Classification (CPC):
Y02E 60/10

(86) International application number:
**PCT/CN2024/078537**

(87) International publication number:
**WO 2024/193299 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.03.2023 CN 202310292217**

(71) Applicant: **Zhuhai CosMX Battery Co., Ltd.**
**Zhuhai, Guangdong 519180 (CN)**

(72) Inventors:
- **WANG, Hai**
  **Zhuhai, Guangdong 519180 (CN)**
- **HUANG, Huawen**
  **Zhuhai, Guangdong 519180 (CN)**
- **ZHU, Hui**
  **Zhuhai, Guangdong 519180 (CN)**
- **LI, Suli**
  **Zhuhai, Guangdong 519180 (CN)**
- **LI, Junyi**
  **Zhuhai, Guangdong 519180 (CN)**

(74) Representative: **Murgitroyd & Company**
**165-169 Scotland Street**
**Glasgow G5 8PL (GB)**

## (54) SODIUM ION BATTERY

(57) Disclosed is a sodium ion battery. By means of adjusting the content of a metallic element M in a positive electrode active substance and the composition of a electrolyte, the problem of gas production in the sodium ion battery during the circulation process can be significantly improved. Specifically, when the electrolyte contains EC, the EC in the electrolyte and a transition metal in the positive active material chemically react, and degrade the performance of the battery. By means of doping the metallic element M in the positive electrode active material and adding VC to the electrolyte, the metallic element M can effectively promote VC to preferentially form a film on the positive electrode. By means of adjusting the mass content of ethylene carbonate in the total mass of the electrolyte, the mass content of vinylene carbonate in the total mass of the electrolyte, and the molar amount of the element M per unit mole of the positive electrode active substance to satisfy $0 \leq w_1 \leq 30\%$ and $0 < w_1/(w_2+d) \leq 5$, said reaction can be effectively prevented, greatly increasing the stability of the sodium ion, and reducing the phenomenon of gas production.

EP 4 629 383 A1

## Description

### TECHNICAL FIELD

The present invention relates to a field of sodium-ion battery technology, and specifically relates to a sodium-ion battery.

### BACKGROUND

Sodium-ion battery has broad application prospects due to its comprehensive advantages such as good safety, low cost, rich resource, and environmental friendliness. Their working principle is similar to that of lithium-ion batteries, mainly utilizing a back-and-forth intercalation and deintercalation of sodium ions between positive and negative electrodes to achieve energy storage and release. At present, a positive electrode material for sodium-ion battery is mainly divided into three categories: transition metal oxide, polyanion compound, and Prussian blue analog. Among them, transition metal oxide has received extensive attention and research from researchers due to its highest theoretical specific capacity. However, when used as the positive electrode, the transition metal oxide has strong oxidizing property, which easily leads to gas generation in the battery and causes safety issue.

### SUMMARY

In order to address the problem of gas generation in sodium-ion battery observed in conventional technology, the present invention aims to to provide a sodium-ion battery that significantly mitigates gas generation during cycling process by adjusting a content of the metallic M element in a positive electrode active substance and a composition of an electrolyte solution.

The object of the present invention is achieved through the following technical solutions:

A sodium-ion battery, where the sodium-ion battery includes a positive electrode plate, a negative electrode plate, a separator, and an electrolyte solution; the positive electrode plate includes a positive electrode active substance, the positive electrode active substance includes metallic Na element, metallic Ni element, metallic Fe element, metallic Mn element, and metallic M element, the metallic M element is one or more selected from Li, Mg, Zn, Co, Ca, Ba, Sr, Al, B, Cr, V, Zr, Ti, Sn, Mo, Ru, Si, Sb, Nb or Te; the electrolyte solution includes vinylene carbonate and optionally added or non-added ethylene carbonate;
the battery satisfies the following relationship:

$$0 \leq w_1 \leq 30\%;$$

$$0 \leq w_1/(w_2+d) \leq 5;$$

where $w_1$ is a mass content of ethylene carbonate in a total mass of the electrolyte solution, w2 is a mass content of vinylene carbonate in the total mass of the electrolyte solution, d is a molar amount of M element per mole of the positive electrode active substance.

Beneficial effects of the present invention are:
The present invention provides a sodium-ion battery, which can significantly mitigate the gas generation problem of the sodium-ion battery during the cycling process by adjusting a content of the metallic M element in a positive electrode active substance and a composition of an electrolyte solution. Specifically, when the electrolyte solution includes ethylene carbonate (EC), the EC in the electrolyte solution chemically reacts with transition metal in a positive electrode active substance, generating gas and deteriorating the battery's performance. By doping the positive electrode active substance with metallic M element and adding vinylene carbonate (VC) to the electrolyte solution, the metallic M element can effectively promote VC to form a film preferentially on the positive electrode. By regulating the mass content of ethylene carbonate in the total mass of the electrolyte solution ($w_1$), the mass content of vinylene carbonate in the total mass of the electrolyte solution ($w_2$), and the molar amount of the M element per mole of the positive electrode active substance (d), so that they satisfy $0 \leq w_1 \leq 30\%$ and $0 \leq w_1/(w_2+d) \leq 5$, the above-mentioned reaction can be effectively prevented, the stability of the sodium-ion battery can be greatly improved, and the gas generation phenomenon can be reduced.

## DETAILED DESCRIPTIONS OF THE EMBODIMENTS

The following is a detailed description of the specific implementations of the present invention. It should be understood that the specific implementations described herein are only used to illustrate and explain the present invention, and are not used to limit the present invention.

Unless otherwise defined, all scientific and technical terms used in the present invention have the same meaning as commonly understood by those skilled in the technical field related to the present invention.

The present invention provides a sodium-ion battery, where the sodium-ion battery includes a positive electrode plate, a negative electrode plate, a separator, and an electrolyte solution; the positive electrode plate includes a positive electrode active substance, the positive electrode active substance includes metallic Na element, metallic Ni element, metallic Fe element, metallic Mn element, metallic M element, the metallic M element is one or more selected from Li, Mg, Zn, Co, Ca, Ba, Sr, Al, B, Cr, V, Zr, Ti, Sn, Mo, Ru, Si, Sb, Nb or Te; the electrolyte solution includes vinylene carbonate and optionally added or non-added ethylene carbonate;

the battery satisfies the following relationship:

$$0 \leq w_1 \leq 30\%;$$

$$0 \leq w_1/(w_2+d) \leq 5;$$

where $w_1$ is a mass content of ethylene carbonate in a total mass of the electrolyte solution, w2 is a mass content of vinylene carbonate in the total mass of the electrolyte solution, d is a molar amount of M element per mole of the positive electrode active substance.

The present invention has found through research that when the electrolyte solution includes ethylene carbonate (EC), the EC in the electrolyte solution will react with transition metals (such as Ni, Fe, and Mn) in a positive electrode active substance through the following reactions:

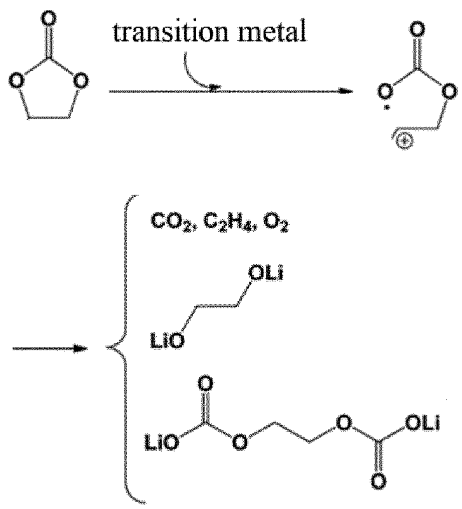


, this reaction easily leads to gas generation in the battery and causes safety issues.

By doping the positive electrode active substance with the metallic M element and adding vinylene carbonate (VC) to the electrolyte solution, the metallic M element can effectively promote vinylene carbonate to preferentially form a film on the positive electrode, thereby preventing EC from reacting on the positive electrode surface to generate gas; and by regulating the mass content of ethylene carbonate in the total mass of the electrolyte solution ($w_1$), the mass content of vinylene carbonate in the total mass of the electrolyte solution ($w_2$), and the molar amount of the M element per mole of the positive electrode active substance (d), so that they satisfy $0 \leq w_1 \leq 30\%$ and $0 \leq w_1/(w_2+d) \leq 5$ are satisfied, the solid electrolyte interphase (SEI) film formed by VC on the positive electrode surface has higher strength, which can effectively prevent the above-mentioned reaction, greatly improve the stability of the sodium-ion battery, and reduce the occurrence of gas generation.

According to the embodiments of the present invention, $0 \leq w_1/(w_2+d) \leq 3$. For example, the value of $w_1/(w_2+d)$ can be 0, 0.1, 0.2, 0.5, 0.8, 1, 1.2, 1.5, 1.8, 2, 2.2, 2.5, 2.8, 3, 3.2, 3.5, 3.8, 4, 4.5 or 5.

According to the embodiments of the present invention, the mass content of ethylene carbonate in the total mass of the electrolyte solution $w_1$ is 0, 1%, 2%, 5%, 8%, 10%, 15%, 20%, 25% or 30%, preferably 8%-25%.

According to the embodiments of the present invention, the mass content of vinylene carbonate in the total mass of the electrolyte solution $w_2$ is 0.1%-10%, for example 0.1%, 0.2%, 0.3%, 0.4%, 0.5%, 0.6%, 0.7%, 0.8%, 0.9%, 1%, 2%, 3%, 4%, 5%, 6%, 7%, 8%, 9% or 10%, preferably 0.5%-5%.

According to the embodiments of the present invention, d is greater than 0 and less than 1, preferably, a value of d is 0.001-0.1, for example 0.001, 0.002, 0.005, 0.008, 0.01, 0.02, 0.03, 0.04, 0.05, 0.06, 0.07, 0.08, 0.09 or 0.1. When the molar amount of the M element is within the range 0.001 to 0.1, it can better promote vinylene carbonate to form a SEI film and improve the strength of the SEI film.

According to the embodiments of the present invention, the electrolyte solution further includes a compound represented by Formula I:

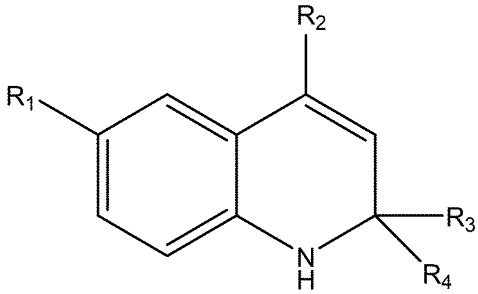
Formula I

in Formula I, $R_1$ is selected from alkoxy group; $R_2$, $R_3$, $R_4$ are the same or different and are each independently selected from alkyl group.

According to the embodiments of the present invention, $R_1$ is selected from $C_{1-12}$ alkoxy group; $R_2$, $R_3$, $R_4$ are the same or different and are each independently selected from $C_{1-12}$ alkyl group.

According to the embodiments of the present invention, $R_1$ is selected from $C_{1-6}$ alkoxy group; $R_2$, $R_3$, $R_4$ are the same or different and are each independently selected from $C_{1-6}$ alkyl group.

According to the embodiments of the present invention, $R_1$ is selected from $C_{1-3}$ alkoxy group; $R_2$, $R_3$, $R_4$ are the same or different and are each independently selected from $C_{1-3}$ alkyl group.

According to the embodiments of the present invention, the compound represented by Formula I is specifically selected from a compound represented by following Formula A:

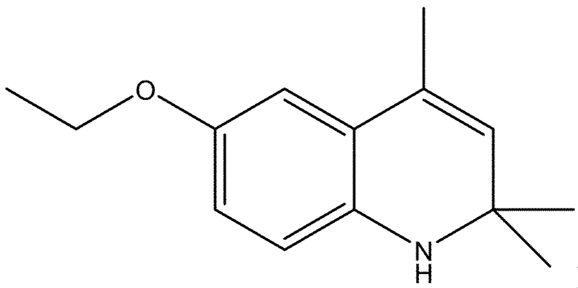
Formula A.

According to the embodiments of the present invention, a mass content of the compound represented by Formula I is 0.1%-5% of the total mass of the electrolyte solution, preferably 1%-2%, such as 0.1%, 0.5%, 1.0%, 1.1%, 1.2%, 1.3%, 1.4%, 1.5%, 1.6%, 1.7%, 1.8%, 1.9%, or 2%.

According to the embodiments of the present invention, the introduction of the compound represented by Formula I can further inhibit the gas generation issue during the battery cycling process. This is mainly because the compound represented by Formula I can effectively form protective films on both the positive and negative electrode surfaces of the sodium-ion battery. Moreover, the protective film formed on the positive electrode surface can synergistically interact with the protective film formed by VC on the positive electrode surface, further inhibiting the reactions of electrolyte components on the positive and negative electrodes. When the content of the compound represented by Formula I is 1%-2%, the formed SEI film has an optimal thickness, and the obtained battery exhibits a best performance.

According to the embodiments of the present invention, the electrolyte solution includes a sodium salt, where the sodium salt is one or more selected from sodium hexafluorophosphate ($NaPF_6$), sodium tetrafluoroborate ($NaBF_4$), sodium perchlorate ($NaClO_4$), sodium hexafluoroarsenate ($NaAsF_6$), sodium hexafluoroantimonate ($NaSbF_6$), sodium difluorophosphate ($NaPF_2O_2$), sodium 4,5-dicyano-2-trifluoromethy limidazole (NaDTI), sodium bis(oxalato)borate

(NaBOB), sodium bis(malonato)borate (NaBMB), sodium difluoro(oxalato)borate (NaDFOB), sodium bis(difluoromalonato)borate (NaBDFMB), sodium (malonatooxalato)borate (NaMOB), sodium (difluoromalonatooxalato)borate (NaDFMOB), sodium tris(oxalato)phosphate (NaTOP), sodium tris(difluoromalonato)phosphate (NaTDFMP), sodium tetrafluoro(oxalato)phosphate (NaTFOP), sodium difluorobis(oxalato)phosphate (NaDFOP), sodium bis(fluorosulfonyl)imide (NaFSI), sodium bis(trifluoromethanesulfonyl)imide (NaTFSI), sodium (fluorosulfonyl)(trifluoromethanesulfonyl)imide ($NaN(SO_2F)(SO_2CF_3)$), sodium nitrate ($NaNO_3$) or sodium fluoride (NaF).

According to the embodiments of the present invention, a concentration of the sodium salt in the electrolyte solution is 0.2 mol/L-2.0 mol/L, for example, 0.2 mol/L, 0.5 mol/L, 0.8 mol/L, 1 mol/L, 1.2 mol/L, 1.5 mol/L, 1.8 mol/L, or 2.0 mol/L. When the concentration of the sodium salt in the electrolyte solution is within the above range, it can accelerate the rate of electrochemical reaction and improve the conductivity of the electrolyte solution.

According to the embodiments of the present invention, the electrolyte solution includes an organic solvent, and the organic solvent is selected from one or more of propylene carbonate (PC), butylene carbonate, difluoroethylene carbonate (DFEC), fluorodimethyl carbonate, fluoroethyl methyl carbonate, dimethyl carbonate (DMC), diethyl carbonate (DEC), dipropyl carbonate, ethyl methyl carbonate (EMC), methyl formate, ethyl formate, propyl formate, butyl formate, methyl acetate, ethyl acetate (EA), propyl acetate, butyl acetate, methyl propionate, ethyl propionate, propyl propionate, butyl propionate, methyl butyrate, ethyl butyrate, propyl butyrate, butyl butyrate, methyl difluoroacetate, ethyl difluoroacetate, $\gamma$-butyrolactone (GBL), $\gamma$-valerolactone, $\delta$-valerolactone, ethylene glycol dimethyl ether (DME), triethylene glycol dimethyl ether, tetraethylene glycol dimethyl ether, ethyl perfluoroethyl ether (F-EPE), difluoroethyl ether (D2), hexafluoropropyl methyl ether (HFPM), methyl fluoroethyl ether (MFE), ethyl methyl fluoroether (EME), tetrahydrofuran (THF), 2-methyltetrahydrofuran, 1,3-dioxolane (DOL), 1,4-dioxane (DOX), sulfolane, dimethyl sulfoxide (DMSO), dichloromethane or dichloroethane.

According to the embodiments of the present invention, a chemical formula of the positive electrode active substance is $Na_xNi_aFe_bMn_cM_dO_2$, where $0<a<1$, $0<b<1$, $0<c<1$, $0<d<1$, and $a+b+c+d=1$, $0.7 \leq x \leq 1.0$; M is one or more selected from Li, Mg, Zn, Co, Ca, Ba, Sr, Al, B, Cr, V, Zr, Ti, Sn, Mo, Ru, Si, Sb, Nb or Te.

According to the embodiments of the present invention, the positive electrode active substance has a polycrystalline morphology or a single-crystal morphology.

According to the embodiments of the present invention, where a Dv50 of the positive electrode active substance is 15 $\mu$m-20 $\mu$m. When the Dv50 of the positive electrode active substance is within the above range, it can provide larger surface areas of the active material, increase reaction sites for sodium ion intercalation, and improve the capacity and cycle life of the battery.

According to the embodiments of the present invention, the positive electrode active substance is prepared by the following method: a coprecipitate is obtained by a coprecipitation method using a soluble Ni salt, a soluble Fe salt, a soluble Mn salt, and a soluble salt containing the M element, and the coprecipitate is mixed with sodium nitrate and sintered to obtain the positive electrode active substance. Where a sintering temperature is 700°C-1000°C, a sintering time is 12 h-40 h, and a sintering atmosphere is air or oxygen.

According to the embodiments of the present invention, a press density of the positive electrode plate is 4.0 $g/cm^3$-4.4 $g/cm^3$. When the press density of the positive electrode plate is within the above range, it can increase the contact area between the positive electrode active substance and ions in the electrolyte solution, promote the progress of electrochemical reactions, improve an ion diffusion rate, thereby reducing the internal resistance of the electrode and improving the capacity and cycle life of the battery.

According to the embodiments of the present invention, the positive electrode plate includes a positive electrode current collector and a positive electrode active material layer; the positive electrode active material layer is coated on a surface of the positive electrode current collector; the positive electrode active material layer includes a positive electrode active material, and the positive electrode active material is the above-mentioned positive electrode active substance.

According to the embodiments of the present invention, the positive electrode active material layer in the positive electrode plate further includes a positive electrode conductive agent and a positive electrode binder.

According to the embodiments of the present invention, the positive electrode conductive agent includes, but is not limited to: a carbon-based material, a metal-based material, a conductive polymer, or mixtures thereof. In some embodiments, the carbon-based material is selected from natural graphite, artificial graphite, carbon black, acetylene black, Keqin black, carbon fiber, or any combination thereof. In some embodiments, the metal-based material is selected from metal powder, metal fiber, copper, nickel, aluminum, and silver. In some embodiments, the conductive polymer is a polyphenylene derivative.

According to the embodiments of the present invention, the positive electrode binder includes, but is not limited to: polyvinylidene fluoride (PVDF), polytetrafluoroethylene (PTFE), styrene-butadiene rubber (SBR), nitrile butadiene rubber (NBR), aqueous acrylic resin, polyvinyl alcohol, polyvinyl butyral, polyurethane, fluororubber, carboxymethyl cellulose (CMC) or polyacrylic acid (PAA).

According to the embodiments of the present invention, a mass percentage of each component in the positive electrode active material layer of the positive electrode plate is: 75 wt%-98 wt% positive electrode active material, 1

wt%-15 wt% positive electrode conductive agent, 1 wt%-10 wt% positive electrode binder.

Preferably, the mass percentage of each component in the positive electrode active material layer of the positive electrode plate is: 82 wt%-96 wt% positive electrode active material, 2 wt%-10 wt% positive electrode conductive agent, and 2 wt%-8 wt% positive electrode binder.

According to the embodiments of the present invention, the positive electrode current collector includes, but is not limited to: aluminum foil, carbon-coated aluminum foil, perforated aluminum foil, stainless steel foil, a polymer substrate coated with a conductive metal, or any combination thereof.

According to the embodiments of the present invention, the positive electrode plate can be prepared by conventional method in the conventional technology. Typically, the positive electrode active material, optional positive electrode conductive agent, and positive electrode binder are dispersed in a solvent (such as N-Methylpyrrolidone (NMP)) to form a uniform positive electrode slurry, the positive electrode slurry is coated on the positive electrode current collector, and after processes such as drying, the positive electrode plate is obtained.

According to the embodiments of the present invention, the separator is one of a polypropylene separator (PP), a polyethylene separator (PE), a polypropylene/polyethylene double-layer composite membrane (PP/PE), a polypropylene/polyethylene/polypropylene three-layer composite membrane (PP/PE/PP), a polyimide electrospun separator (PI), a cellulose non-woven separator, a polyethylene terephthalate non-woven separator (PET), or a separator with a ceramic coating.

According to the embodiments of the present invention, the separator is positioned between the positive electrode plate and the negative electrode plate to serve an isolating function.

According to the embodiments of the present invention, the negative electrode plate includes a negative electrode current collector and a negative electrode active material layer; the negative electrode active material layer is coated on the surface of the negative electrode current collector; the negative electrode active material layer includes a negative electrode active material.

According to the embodiments of the present invention, the negative electrode active material in the negative electrode plate is, for example, selected from at least one of natural graphite, artificial graphite, mesocarbon microbead, hard carbon, soft carbon, Sn, SnO, $SnO_2$, Sb, $Sb_2O_3$, Bi, $Bi_2O_3$ or $TiO_2$, etc. Exemplarily, the negative electrode active material in the negative electrode plate is selected from hard carbon.

According to the embodiments of the present invention, the negative electrode active material layer in the negative electrode plate further includes a negative electrode conductive agent and a negative electrode binder.

According to the embodiments of the present invention, the negative electrode conductive agent includes, but is not limited to: a carbon-based material, a metal-based material, a conductive polymer, or mixtures thereof. In some embodiments, the carbon-based material is selected from natural graphite, artificial graphite, carbon black, acetylene black, Keqin black, carbon fiber, or any combination thereof. In some embodiments, the metal-based material is selected from metal powder, metal fiber, copper, nickel, aluminum, and silver. In some embodiments, the conductive polymer is a polyphenylene derivative.

According to the embodiments of the present invention, the negative electrode binder includes, but is not limited to: polyvinylidene fluoride (PVDF), polytetrafluoroethylene (PTFE), styrene-butadiene rubber (SBR), nitrile butadiene rubber (NBR), aqueous acrylic resin, polyvinyl alcohol, polyvinyl butyral, polyurethane, fluororubber, carboxymethyl cellulose (CMC), polyacrylic acid (PAA), epoxy resin, hydroxypropyl cellulose, diacetyl cellulose, polyvinyl chloride, carboxylated polyvinyl chloride, polyvinylpyrrolidone, or nylon.

According to the embodiments of the present invention, a mass percentage of each component in the negative electrode active material layer of the negative electrode plate is: 75 wt%-98 wt% negative electrode active material, 1 wt%-15 wt% negative electrode conductive agent, and 1 wt%-10 wt% negative electrode binder.

Preferably, the mass percentage of each component in the negative electrode active material layer of the negative electrode plate is: 82 wt%-96 wt% negative electrode active material, 2 wt%-10 wt% negative electrode conductive agent, and 2 wt%-8 wt% negative electrode binder.

According to the embodiments of the present invention, the negative electrode current collector includes, but is not limited to: copper foil, carbon-coated copper foil, perforated copper foil, nickel foil, stainless steel foil, titanium foil, nickel foam, copper foam, a polymer substrate coated with a conductive metal, and any combination thereof.

According to the embodiments of the present invention, the negative electrode plate can be prepared by conventional method in the conventional technology. Typically, the negative electrode active material, optional negative electrode conductive agent and negative electrode binder are dispersed in a solvent (such as deionized water) to form a uniform negative electrode slurry, the negative electrode slurry is coated on the negative electrode current collector, and after processes such as drying, the negative electrode plate is obtained.

According to the embodiments of the present invention, the charge cut-off voltage of the sodium-ion battery is less than 4.1 V.

Research has found that when the charge cut-off voltage of the sodium-ion battery is greater than or equal to 4.1 V, the catalytic oxidation performance of transition metal at the positive electrode end will be extremely enhanced, resulting

in a significant deterioration in the battery's performance.

The following will further describe the present invention in detail in conjunction with specific embodiments. It should be understood that the following embodiments are only for exemplarily illustrating and explaining the present invention, and should not be construed as limiting the protection scope of the present invention. All technologies implemented based on the above content of the present invention are covered within the protection scope intended by the present invention.

Unless otherwise specified, the experimental methods used in the following embodiments are conventional methods; unless otherwise specified, the reagents, materials, etc. used in the following embodiments can all be obtained from commercial sources.

Preparation Example 1

Preparation of a positive electrode active substance

(1) First, soluble Ni salt (nickel sulfate), Fe salt (iron sulfate), Mn salt (manganese sulfate), and soluble salt containing M element (such as aluminum sulfate, magnesium nitrate, zinc nitrate, boric acid, cobalt nitrate, tin nitrate, etc.) were mixed according to a stoichiometric ratio (molar ratio), and added them to a solvent to obtain a mixed solution, in which a stoichiometric ratio of Ni/Fe/Mn was 1:1:1, and a stoichiometric amount of the M element was d. An appropriate amount of ammonia water was slowly added to the mixed solution while maintaining stirring, and a pH value of the solution was $11.5 \pm 0.2$, to obtain a coprecipitate containing Ni, Fe, Mn, and M; after filtration, the coprecipitate was washed with deionized water and kept for further use;

(2) The composite precursor obtained in step (1) was washed with deionized water, dried, mixed uniformly with sodium carbonate according to a stoichiometric ratio, and subjected to high-temperature sintering: a sintering temperature was 1000°C, and a sintering time was 24 h; a sintering atmosphere was air;

(3) The obtained sintered product was ground to prepare the positive electrode active substance. The Dv50 of the positive electrode active substance was 15 μm-20 μm, and the morphology of the positive electrode active substance was polycrystalline morphology.

Preparation Example 2

Preparation of an electrolyte solution

In an argon-filled glove box ($H_2O$<0.1 ppm, $O_2$<0.1 ppm), propylene carbonate (PC) and diethyl carbonate (DEC) were mixed uniformly in a mass ratio of 2:7, then 12.5 wt% (based on the total mass of the electrolyte solution) of thoroughly dried sodium hexafluorophosphate ($NaPF_6$) was added and dissolved. Subsequently, ethylene carbonate (EC) with a mass of $w_1$ based on the total mass of the electrolyte solution and vinylene carbonate (VC) with a mass of $w_2$ based on the total mass of the electrolyte solution were added, and the mixture was stirred uniformly. After passing tests for moisture and free acid, the required electrolyte solution was obtained.

Preparation Example 3

Preparation of a positive electrode plate

The positive electrode active substance prepared in Preparation Example 1, conductive agent carbon black, and binder polyvinylidene fluoride (PVDF) were weighed in a weight ratio of 95:2.5:2.5 and dispersed in an appropriate amount of N-methylpyrrolidone. The mixture was thoroughly stirred to form a uniform positive electrode slurry. The positive electrode slurry was coated on an aluminum foil serving as a positive electrode current collector, and then dried, roll-pressed, and cut to obtain a positive electrode plate. The press density of the positive electrode plate was 4.0 g/cm$^3$-4.4 g/cm$^3$.

Preparation Example 4

Preparation of a negative electrode plate

Negative electrode active substance hard carbon, conductive agent carbon black, binder styrene-butadiene rubber (SBR), and thickener sodium carboxymethyl cellulose (CMC) were weighed in a weight ratio of 90:2.5:5.0:2.5 and

dispersed in an appropriate amount of deionized water, The mixture was thoroughly stirred to form a uniform negative electrode slurry. The negative electrode slurry was coated on a copper foil serving as a negative electrode current collector, and then dried, roll-pressed, and cut to obtain a negative electrode plate.

Preparation Example 5

Preparation of a sodium-ion battery

The above positive electrode, negative electrode, and separator were stacked in sequence, with a separator placed between the positive electrode and the negative electrode. After tab welding and winding, a jelly roll was obtained. The jelly roll was placed in an aluminum-plastic film packaging bag, and then the above electrolyte solution was injected. After vacuum sealing, standing, formation, shaping, and other processes, a sodium-ion battery was obtained.

Test Example 1

Full battery gas generation test

A sodium-ion battery was placed at 25°C, charged at a constant current of 0.5 C to the upper voltage limit (4.0 V), then charged at a constant voltage of 4.0 V until the current dropped to 0.05 C, and allowed to stand for 5 min; subsequently, the battery was discharged at a constant current of 0.5 C to a lower voltage limit of 1.5 V, and allowed to stand for 5 min. This constituted one charge-discharge cycle. Charging/discharging was performed in this manner, and the number of cycles in which the sodium-ion battery generated gas was recorded.

Examples 1-16 and Comparative Examples 1-7

The sodium-ion batteries of Examples 1-16 and Comparative Examples 1-7 were all manufactured using the above methods of Preparation Examples 1-5 and tested using the above method of Test Example 1. The differences lie in the content of metallic M element in the positive electrode active substance and the contents of VC and EC in the electrolyte solution. The details are shown in the following table:

| No. | Doped element (M) | Content of doped element (d) | Content of EC ($w_1$) | Content of VC ($w_2$) | $w_1/(w_2+d)$ | Number of cycles until gas generation |
|---|---|---|---|---|---|---|
| Example 1 | Al | 0.04 | 8.65% | 1.0% | 1.73 | 644 |
| Example 2 | Al | 0.05 | 20% | 2.0% | 2.86 | 571 |
| Example 3 | Mg | 0.05 | 20% | 2.0% | 2.86 | 575 |
| Example 4 | Zn | 0.05 | 20% | 2.0% | 2.86 | 629 |
| Example 5 | Co | 0.05 | 20% | 2.0% | 2.86 | 613 |
| Example 6 | Ca | 0.05 | 20% | 2.0% | 2.86 | 609 |
| Example 7 | B | 0.05 | 20% | 2.0% | 2.86 | 636 |
| Example 8 | Sn | 0.05 | 20% | 2.0% | 2.86 | 569 |
| Example 9 | Ti | 0.05 | 20% | 2.0% | 2.86 | 636 |
| Example 10 | Al | 0.05 | / | 2.0% | 0 | 597 |
| Example 11 | Al | 0.05 | 10% | 2.0% | 1.43 | 633 |
| Example 12 | Al | 0.05 | 10% | 1.0% | 1.67 | 560 |
| Example 13 | Al | 0.03 | 10% | 2.0% | 2 | 592 |
| Example 14 | Al | 0.05 | 15% | 2.0% | 2.14 | 640 |
| Example 15 | Al | 0.05 | 25% | 2.0% | 3.57 | 420 |
| Example 16 | Al | 0.05 | 20% | 1.0% | 3.33 | 450 |
| Example 17a | Al | 0.001 | 10% | 2.0% | 4.76 | 453 |

(continued)

| No. | Doped element (M) | Content of doped element (d) | Content of EC ($w_1$) | Content of VC ($w_2$) | $w_1/(w_2+d)$ | Number of cycles until gas generation |
|---|---|---|---|---|---|---|
| Example 17b | Al | 0.1 | 20% | 2.0% | 1.67 | 496 |
| Example 17c | Al | 0.0005 | 10% | 2.0% | 4.87 | 239 |
| Example 17d | Al | 0.12 | 20% | 2.0% | 1.43 | 398 |
| Example 18a | Al | 0.05 | 20% | 0.1% | 3.92 | 493 |
| Example 18b | Al | 0.05 | 20% | 10% | 1.33 | 465 |
| Example 18c | Al | 0.05 | 20% | 0.05% | 3.96 | 349 |
| Example 18d | Al | 0.05 | 20% | 15% | 1 | 294 |
| Comparative Example 1 | Al | 0.08 | 35% | 5.0% | 2.69 | 75 |
| Comparative Example 2 | Mg | 0.08 | 35% | 5.0% | 2.69 | 65 |
| Comparative Example 3 | Al | 0.02 | 20% | 0.5% | 8 | 89 |
| Comparative Example 4 | Mg | 0.02 | 20% | 0.5% | 8 | 91 |
| Comparative Example 5 | / | / | 20% | 2.0% | 10 | 102 |
| Comparative Example 6 | Al | 0.05 | 20% | / | 4 | 121 |
| Comparative Example 7 | / | / | / | / | / | 51 |
| Comparative Example 8 | Al | 0.05 | / | 2.0% | / | 219 |
| Note: When calculating $w_1/(w_2+d)$, the units of $w_1$ and $w_2$ were %, and only the numerical values of $w_1$ and $w_2$ were substituted for calculation. The value of d was also converted into a percentage (%) for calculation. Taking Example 1 as an example, $w_1$ was 8.65%, $w_2$ was 1.0%, d was 0.04 (i.e., 4.0%), and $w_1/(w_2+d)$ = 8.65/(1.0+4.0) = 1.73. | | | | | | |

As can be seen from the table above, by doping the positive electrode active substance with the metallic M element and adding VC to the electrolyte solution, the metallic M element can effectively promote VC to preferentially form a film on the positive electrode. By regulating the mass content of ethylene carbonate in the total mass of the electrolyte solution, the mass content of vinylene carbonate in the total mass of the electrolyte solution, and the molar amount of the M element per mole of the positive electrode active substance, so that they satisfy $0 \le w_1 \le 30\%$ and $0 \le w_1/(w_2+d) \le 5$, the occurrence of side reaction can be effectively prevented, the stability of the sodium-ion battery can be greatly improved, and the gas generation phenomenon can be reduced.

The sodium-ion batteries of Examples 2.1-6.1 were all manufactured using the above methods of the Preparation Examples and tested using the above method of Test Example 1. The difference is that the additive represented by Formula A was further added to the electrolyte solution. The details are shown in the following table:

| No. | Doped element (M) | Content of doped element (d) | Content of EC ($w_1$) | Content of VC ($w_2$) | $w_1/(w_2+d)$ | Additive shown in Formula A | Number of cycles until gas generation |
|---|---|---|---|---|---|---|---|
| Example 2 | Al | 0.05 | 20% | 2.0% | 2.86 | / | 571 |
| Example 2.1 | Al | 0.05 | 20% | 2.0% | 2.86 | 1.10% | 783 |
| Example 3 | Mg | 0.05 | 20% | 2.0% | 2.86 | / | 575 |
| Example 3.1 | Mg | 0.05 | 20% | 2.0% | 2.86 | 1.10% | 744 |
| Example 4 | Zn | 0.05 | 20% | 2.0% | 2.86 | / | 629 |
| Example 4.1 | Zn | 0.05 | 20% | 2.0% | 2.86 | 1.10% | 712 |
| Example 5 | Co | 0.05 | 20% | 2.0% | 2.86 | / | 613 |
| Example 5.1 | Co | 0.05 | 20% | 2.0% | 2.86 | 1.10% | 725 |
| Example 6 | Ca | 0.05 | 20% | 2.0% | 2.86 | / | 609 |

(continued)

| No. | Doped element (M) | Content of doped element (d) | Content of EC ($w_1$) | Content of VC ($w_2$) | $w_1/(w_2+d)$ | Additive shown in Formula A | Number of cycles until gas generation |
|---|---|---|---|---|---|---|---|
| Example 6.1 | Ca | 0.05 | 20% | 2.0% | 2.86 | 1.10% | 738 |
| Example 18e | Al | 0.05 | 20% | 0.05% | 3.96 | 1.10% | 453 |
| Example 18f | Al | 0.05 | 20% | 15% | 1 | 1.10% | 497 |
| Example 19a | Al | 0.05 | 20% | 2.0% | 2.86 | 0.1% | 438 |
| Example 19b | Al | 0.05 | 20% | 2.0% | 2.86 | 5% | 378 |
| Example 19c | Al | 0.05 | 20% | 2.0% | 2.86 | 0.05% | 267 |
| Example 19d | Al | 0.05 | 20% | 2.0% | 2.86 | 8% | 269 |
| Comparative Example 3 | Al | 0.02 | 20% | 0.5% | 8 | / | 89 |
| Comparative Example 3.1 | Al | 0.02 | 20% | 0.5% | 8 | 1.10% | 74 |
| Comparative Example 4 | Mg | 0.02 | 20% | 0.5% | 8 | / | 91 |
| Comparative Example 4.1 | Mg | 0.02 | 20% | 0.5% | 8 | 1.10% | 73 |

As can be seen from the table above, by doping tthe positive electrode active substance with the metallic M element and adding VC to the electrolyte solution, the metallic M element can effectively promote VC to preferentially form a film on the positive electrode. The further introduction of the compound represented by Formula I can further effectively inhibit the gas generation issue during the battery cycling process. This is mainly because the compound represented by Formula I can effectively form protective films on both the positive and negative electrodes surfaces of the sodium-ion battery, inhibiting reactions of electrolyte solution components on the positive and negative electrodes. When the content of the compound represented by Formula I is 1.1%, the formed solid electrolyte interphase (SEI) has the optimal thickness, and the obtained battery exhibits a best performance. Conversely, when the compound represented by Formula I is used in combination with batteries that do not satisfy $0 \le w_1 \le 30\%$ and $0 \le w_1/(w_2+d) \le 5$, the compound has no improvement effect on cyclic gas generation and may even have a possibility of causing certain deterioration.

The sodium-ion batteries of Examples 1.1-1.4 were all manufactured using the above methods of the Preparation Examples and tested using the above method of Test Example 1. The difference lies in the charge voltage range. The details are shown in the following table:

| No. | Doped element (M) | Content of doped element (d) | Content of EC($w_1$) | Content of VC($w_2$) | $w_1/(w_2+d)$ | Charge cut-off voltage | Number of cycles until gas generation |
|---|---|---|---|---|---|---|---|
| Example 1 | Al | 0.04 | 8.65% | 1.0% | 1.73 | 4.0V | 644 |
| Example 1.1 | Al | 0.04 | 8.65% | 1.0% | 1.73 | 3.9V | 678 |
| Example 1.2 | Al | 0.04 | 8.65% | 1.0% | 1.73 | 4.1V | 75 |
| Example 1.3 | Al | 0.04 | 8.65% | 1.0% | 1.73 | 4.2V | 78 |
| Example 1.4 | Al | 0.04 | 8.65% | 1.0% | 1.73 | 4.3V | 66 |

When the charge cut-off voltage of the sodium-ion battery is greater than or equal to 4.1 V, the catalytic oxidation performance of transition metal at the positive electrode end will be drastically enhanced, leading to a significant deterioration in the battery’s performance.

Example Group 20

Example 20a was carried out with reference to Example 2, differing in that the Dv50 of the positive electrode active substance was 30 μm-35 μm; the number of cycles with gas generation was 496.

Example 20b was carried out with reference to Example 2, differing in that the press density of the positive electrode plate was 3.5 $g/cm^3$-3.8 $g/cm^3$; the number of cycles with gas generation was 398.

The above describes the embodiments of the present invention. However, the present invention is not limited to the above embodiments. Any modifications, equivalent substitutions, improvements, etc. made within the spirit and principles of the present invention should be included in the protection scope of the present invention.

## Claims

1. A sodium-ion battery, **characterized in that** the sodium-ion battery comprises a positive electrode plate, a negative electrode plate, a separator and an electrolyte solution; the positive electrode plate comprises a positive electrode active substance, the positive electrode active substance comprises metallic Na element, metallic Ni element, metallic Fe element, metallic Mn element, and metallic M element, the metallic M element is one or more selected from Li, Mg, Zn, Co, Ca, Ba, Sr, Al, B, Cr, V, Zr, Ti, Sn, Mo, Ru, Si, Sb, Nb or Te; the electrolyte solution comprises vinylene carbonate and optionally added or non-added ethylene carbonate;

   the battery satisfies the following relationship:

   $$0 \le w_1 \le 30\%;$$

   $$0 \le w_1/(w_2+d) \le 5;$$

   wherein $w_1$ is a mass content of ethylene carbonate in a total mass of the electrolyte solution, w2 is a mass content of vinylene carbonate in the total mass of the electrolyte solution, d is a molar amount of M element per mole of the positive electrode active substance.

2. The sodium-ion battery according to claim 1, **characterized in that** $w_2$ is 0.1%-10%.

3. The sodium-ion battery according to claim 1 or 2, **characterized in that** d is greater than 0 and less than 1, preferably, a value of d is 0.001-0.1.

4. The sodium-ion battery according to any one of claims 1 to 3, **characterized in that** $0 \le w_1/(w_2+d) \le 3$.

5. The sodium-ion battery according to any one of claims 1 to 4, **characterized in that** the electrolyte solution further comprises a compound represented by Formula I:

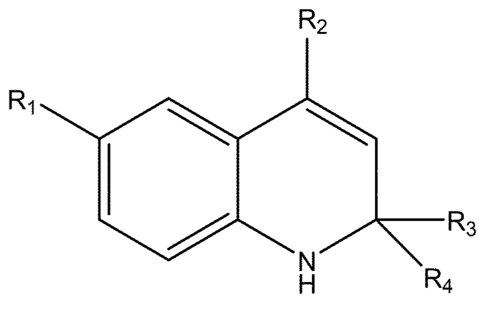

Formula I

   in Formula I, $R_1$ is selected from alkoxy group; $R_2$, $R_3$, $R_4$ are the same or different and are each independently selected from alkyl group.

6. The sodium-ion battery according to claim 5, **characterized in that** $R_1$ is selected from $C_{1-12}$ alkoxy group; $R_2$, $R_3$, $R_4$ are the same or different and are each independently selected from $C_{1-12}$ alkyl group;

preferably, $R_1$ is selected from $C_{1-6}$ alkoxy group; $R_2$, $R_3$, $R_4$ are the same or different and are each independently selected from $C_{1-6}$ alkyl group;
more preferably, $R_1$ is selected from $C_{1-3}$ alkoxy group; $R_2$, $R_3$, $R_4$ are the same or different and are each independently selected from $C_{1-3}$ alkyl group.

7. The sodium-ion battery according to claim 5 or 6, **characterized in that** the compound represented by Formula I is specifically selected from a compound represented by following Formula A:

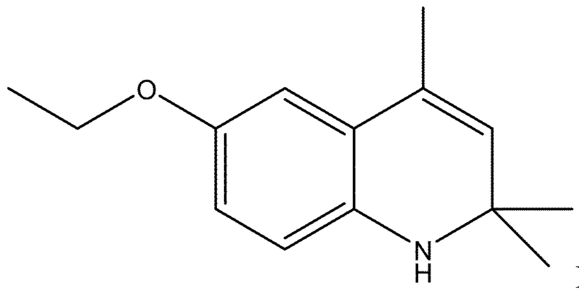
Formula A.

8. The sodium-ion battery according to any one of claims 5 to 7, **characterized in that** a mass content of the compound represented by Formula I is 0.1%-5% of a total mass of the electrolyte solution, preferably 1%-2%.

9. The sodium-ion battery according to any one of claims 1 to 8, **characterized in that** a chemical formula of the positive electrode active substance is $Na_xNi_aFe_bMn_cM_dO_2$, $0<a<1$, $0<b<1$, $0<c<1$, $0<d<1$, and $a+b+c+d=1$, $0.7\leq x\leq 1.0$; M is one or more selected from Li, Mg, Zn, Co, Ca, Ba, Sr, Al, B, Cr, V, Zr, Ti, Sn, Mo, Ru, Si, Sb, Nb or Te.

10. The sodium-ion battery according to any one of claims 1 to 9, **characterized in that** the M element is one or more selected from Al, Mg, Zn, Co, Ca, B, Sn or Ti.

11. The sodium-ion battery according to any one of claims 1 to 10, **characterized in that** a Dv50 of the positive electrode active substance is 15 μm-20 μm.

12. The sodium-ion battery according to any one of claims 1 to 11, **characterized in that** a press density of the positive electrode plate is 4.0 $g/cm^3$-4.4 $g/cm^3$.

13. The sodium-ion battery according to any one of claims 1 to 12, **characterized in that** the electrolyte solution comprises a sodium salt;

preferably, the sodium salt is one or more selected from sodium hexafluorophosphate, sodium tetrafluoroborate, sodium perchlorate, sodium hexafluoroarsenate, sodium hexafluoroantimonate, sodium difluorophosphate, sodium 4,5-dicyano-2-trifluoromethy limidazole, sodium bis(oxalato)borate, sodium bis(malonato)borate, sodium difluoro(oxalato)borate, sodium bis(difluoromalonato)borate, sodium (malonatooxalato)borate, sodium (difluoromalonatooxalato)borate, sodium tris(oxalato)phosphate, sodium tris(difluoromalonato)phosphate, sodium tetrafluoro(oxalato)phosphate, sodium difluorobis(oxalato)phosphate, sodium bis(fluorosulfonyl)imide, sodium bis(trifluoromethanesulfonyl)imide, sodium (fluorosulfonyl)(trifluoromethanesulfonyl)imide, sodium nitrate or sodium fluoride;
preferably, a concentration of the sodium salt in the electrolyte solution is 0.2 mol/L-2.0 mol/L.

14. The sodium-ion battery according to any one of claims 1 to 13, **characterized in that** an active material in the negative electrode plate comprises at least one of natural graphite, artificial graphite, mesocarbon microbead, hard carbon, soft carbon, Sn, SnO, $SnO_2$, Sb, $Sb_2O_3$, Bi, $Bi_2O_3$ or $TiO_2$.

15. The sodium-ion battery according to any one of claims 1 to 14, **characterized in that** a charge cut-off voltage of the sodium-ion battery is less than 4.1 V.

## INTERNATIONAL SEARCH REPORT

International application No. **PCT/CN2024/078537**

**A. CLASSIFICATION OF SUBJECT MATTER**

H01M10/054(2010.01)i； H01M4/38(2006.01)i； H01M4/134(2010.01)i； H01M10/0563(2010.01)i

According to International Patent Classification (IPC) or to both national classification and IPC

**B. FIELDS SEARCHED**

Minimum documentation searched (classification system followed by classification symbols)

IPC： H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; STN: 冠宇, 电池, 钠, 碳酸亚乙烯酯, 碳酸亚乙酸酯, 碳酸乙烯酯, 碳酸亚乙酯, 重量, 质量, 产气, 气体, VC, EC, Na, Fe, Ni, Mn, battery, sodium, ethylene carbonate, ethyl carbonate, weight, mass, gas

**C. DOCUMENTS CONSIDERED TO BE RELEVANT**

| Category* | Citation of document, with indication, where appropriate, of the relevant passages | Relevant to claim No. |
|---|---|---|
| PX | CN 116632322 A (ZHUHAI COSMX BATTERY CO., LTD.) 22 August 2023 (2023-08-22) description, paragraphs [0003]-[0093] | 1-15 |
| X | CN 115642307 A (GUANGXI NORMAL UNIVERSITY) 24 January 2023 (2023-01-24) description, paragraphs [0006]-[0032] | 1-4, 9-15 |
| X | CN 101013763 A (TIANJIN LISHEN BATTERY JOINT-STOCK CO., LTD.) 08 August 2007 (2007-08-08) description, page 2, line 1 to page 6, last line | 1-4, 9-15 |
| X | CN 111542960 A (CENTRE NATIONAL DE LA RECHERCHE SCIENTIFIQUE et al.) 14 August 2020 (2020-08-14) description, paragraphs [0005]-[0112] | 1-4, 9-15 |
| X | CN 115117447 A (CENTRE NATIONAL DE LA RECHERCHE SCIENTIFIQUE et al.) 27 September 2022 (2022-09-27) description, paragraphs [0009]-[0199] | 1-4, 9-15 |
| Y | CN 115642307 A (GUANGXI NORMAL UNIVERSITY) 24 January 2023 (2023-01-24) description, paragraphs [0006]-[0032] | 5-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 March 2024** | **31 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/078537**

**C. DOCUMENTS CONSIDERED TO BE RELEVANT**

| Category* | Citation of document, with indication, where appropriate, of the relevant passages | Relevant to claim No. |
|---|---|---|
| Y | CN 101013763 A (TIANJIN LISHEN BATTERY JOINT-STOCK CO., LTD.) 08 August 2007 (2007-08-08)<br>description, page 2, line 1 to page 6, last line | 5-15 |
| Y | CN 111542960 A (CENTRE NATIONAL DE LA RECHERCHE SCIENTIFIQUE et al.) 14 August 2020 (2020-08-14)<br>description, paragraphs [0005]-[0112] | 5-15 |
| Y | CN 115117447 A (CENTRE NATIONAL DE LA RECHERCHE SCIENTIFIQUE et al.) 27 September 2022 (2022-09-27)<br>description, paragraphs [0009]-[0199] | 5-15 |
| Y | JP H02244566 A (FURUKAWA ELECTRIC CO., LTD.) 28 September 1990 (1990-09-28)<br>text, page 1, left column, line 1 to page 2, right column, last line | 5-15 |

Form PCT/ISA/210 (second sheet) (July 2022)

**INTERNATIONAL SEARCH REPORT**
**Information on patent family members**

International application No.
**PCT/CN2024/078537**

| Patent document cited in search report | Publication date (day/month/year) | Patent family member(s) | Publication date (day/month/year) |
|---|---|---|---|
| CN 116632322 A | 22 August 2023 | None | |
| CN 115642307 A | 24 January 2023 | None | |
| CN 101013763 A | 08 August 2007 | CN 100466366 C | 04 March 2009 |
| CN 111542960 A | 14 August 2020 | EP 3695451 A1 | 19 August 2020 |
| | | US 2020243910 A1 | 30 July 2020 |
| | | US 11482729 B2 | 25 October 2022 |
| | | WO 2019072986 A1 | 18 April 2019 |
| | | EP 3471191 A1 | 17 April 2019 |
| CN 115117447 A | 27 September 2022 | EP 4064408 A1 | 28 September 2022 |
| | | WO 2022200343 A1 | 29 September 2022 |
| | | HK 40078747 A0 | 06 April 2023 |
| | | KR 20230160328 A | 23 November 2023 |
| | | EP 4315477 A1 | 07 February 2024 |
| JP H02244566 A | 28 September 1990 | None | |

Form PCT/ISA/210 (patent family annex) (July 2022)